# EUROPEAN PATENT SPECIFICATION

(11) **EP 0 867 953 B1**
(45) Date of publication and mention of the grant of the patent: **05.06.2002**
(21) Application number: 98200083.8
(22) Date of filing: 14.01.1998
(51) Int. Cl.: H01M 2/20, H01R 11/28

(54) **Method for forming a battery terminal connector**
Verfahren zur Herstellung einer Batterieanschlussklemme
Procédé pour la fabrication d'un connecteur pour borne de batterie

(30) Priority: 05.02.1997 GB 9702367
(43) Date of publication of application: 30.09.1998
(73) Proprietor: Delphi Automotive Systems Deutschland GmbH, D-42369 Wuppertal (DE)
(72) Inventor: Alksnat, Holger, 58285 Gevelsberg (DE); Dinger, Jürgen, 42899 Remscheid (DE)
(74) Representative: Denton, Michael John

(56) References cited:
- EP-A- 0 763 863
- EP-A- 0 776 054
- FR-A- 2 732 823
- GB-A- 1 478 307
- US-A- 5 316 505

## Description

### Technical Field

The present invention relates to a battery terminal connector for making an electrical connection between a terminal of a battery of a motor vehicle and a number of fuses.

### Background of the Invention

It is known to provide an electrical connection between a terminal of a battery on a motor vehicle and a number of fuses in a fuse holder. The electrical connection comprises a terminal clamp and a bracket which is connected to the terminal clamp by screws. The terminal clamp is made from brass and is clampable to the battery terminal to make an electrical connection therewith. The bracket is stamped from tin plated copper and is formed to be electrically connectable with the fuses. This known arrangement provides a poor electrical connection between the terminal clamp and the bracket. FR-A-2732823, GB-A-1478307, EP-A-0776054 and EP-A-0763863 all disclose battery terminal connectors which are formed in one piece. US-A-5316505 discloses a battery terminal connector which is formed from two parts which are joined together by the bolt clamping the connector to the battery post.

### Summary of the Invention

It is an object of the present invention to overcome the above mentioned problem.

A method of forming a battery terminal connector in accordance with the present invention is characterised by the features specified in Claim 1.

A battery terminal connector in accordance with the present invention provides a better and permanent electrical connection between the terminal clamp and the bracket.

### Brief Description of the Drawings

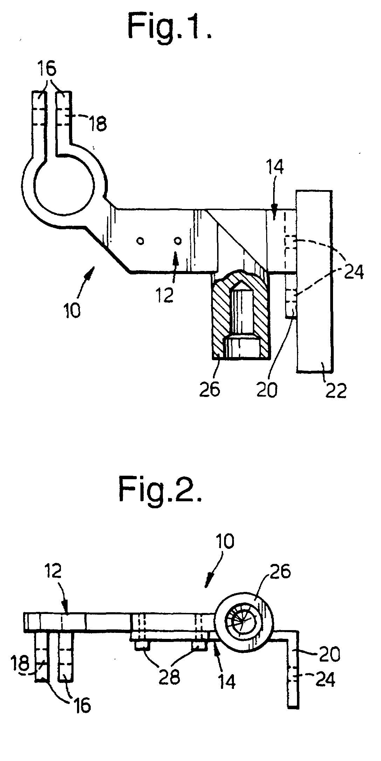

The present invention will now be described, by way of example, with reference to the accompanying drawings, in which:-
Figure 1 is a top view of a battery terminal connector in accordance with the present invention connected to a fuse holder; and
Figure 2 is a side view of the battery terminal connector of Figure 1.

### Description of the Preferred Embodiment

Referring to the drawings, the battery terminal connector 10 comprises a terminal clamp 12 and a bracket 14. The terminal clamp 12 has a portion 16 which is clampable to a terminal (not shown) of a battery of a motor vehicle by screws which pass through apertures 18, in a manner well known to those skilled in the art. The bracket 14 has a portion 20 which is connectable to fuses (not shown) in a fuse holder 22 by screws (not shown) which pass through holes 24. The terminal clamp 12 also has a fitting 26 for connection to an electric cable (not shown) providing power to a starter motor of the motor vehicle or to other electrical loads which are permanently connected to the battery.

The terminal clamp 12 is preferably formed by forging or casting. The bracket 14 is preferably formed by stamping from sheet material. The terminal clamp 12 and bracket 14 are formed from the same material, preferably brass, and are non-detachably joined together, preferably by screws 28 which initially join the bracket and the terminal clamp, and then by soldering to form the non-detachable joint.

The battery terminal connector of the present invention has particular application in a modular fuse unit which is mountable on the battery. In this case, the battery terminal connector is integral with the modular unit and provides both a mechanical connection and an electrical connection between the battery terminal and the modular unit.

## Claims

1. A method of forming a battery terminal connector (10) comprising a battery terminal clamp (12) having a portion (16) for clamping to a battery terminal, and a fuse bracket (14) having a portion (20) for electrically connecting with a fuse; the method comprising the steps of forming the battery terminal clamp (12) by a first process; separately forming the fuse bracket (14) by a second process, the fuse bracket being formed from the same material as the battery terminal clamp; and non-detachably joining the battery terminal clamp and the fuse bracket.

2. A method as claimed in Claim 1, wherein the first process is forging or casting.

3. A method as claimed in Claim 1 or Claim 2, wherein the second process is stamping from sheet material.

4. A method as claimed in any one of Claims 1 to 3, wherein the joining step comprises soldering.

## Patentansprüche

1. Verfahren zum Bilden eines Batterieanschlussverbinders (10), der eine Batterieanschlussklammer (12) mit einem Abschnitt (16) zum Klemmen an einen Batterieanschluss und einen Sicherungsträger (14) mit einem Abschnitt (20) zum elektrischen Verbinden mit einer Sicherung umfasst; wobei das Verfahren die Schritte umfasst, dass die Batterieanschlussklammer (12) durch einen ersten Prozess gebildet wird; der Sicherungsträger (14) durch einen zweiten Prozess separat gebildet wird, wobei der Sicherungsträger aus dem gleichen Material wie die Batterieanschlussklammer gebildet wird; und die Batterieanschlussklammer und der Sicherungsträger nicht lösbar zusammengefügt werden.

2. Verfahren nach Anspruch 1, wobei der erste Prozess Schmieden oder Gießen ist.

3. Verfahren nach Anspruch 1 oder Anspruch 2, wobei der zweite Prozess Stanzen aus Blech ist.

4. Verfahren nach einem der Ansprüche 1 bis 3, wobei der Verbindungsschritt Löten umfasst.

## Revendications

1. Procédé de. formation d'un connecteur (10) de borne de batterie comprenant une bride de serrage (12) de borne de batterie comportant une partie (16) pour une fixation à une borne de batterie, et un étrier (14) de fusible comportant une partie (20) pour une connexion électrique avec un fusible ; le procédé comprenant les étapes de formation de la bride de serrage (12) de borne de batterie par un premier processus ; la formation séparée de l'étrier (14) de fusible par un deuxième processus, l'étrier de fusible étant formé à partir du même matériau que la bride de serrage de borne de batterie ; et la liaison de manière non détachable de la bride de serrage de borne de batterie et de l'étrier de fusible.

2. Procédé selon la revendication 1, dans lequel le premier processus est un forgeage ou un moulage.

3. Procédé selon la revendication 1 ou la revendication 2, dans lequel le deuxième processus est un estampage à partir d'un matériau en feuille.

4. Procédé selon l'une quelconque des revendications 1 à 3, dans lequel l'étape de liaison comprend un soudage.
